# EUROPEAN PATENT APPLICATION

(11) **EP 1 532 898 A1**
(43) Date of publication of application: **25.05.2005**
(21) Application number: 03723303.8
(22) Date of filing: 09.05.2003
(51) Int. Cl.: A47C 7/00, A47C 7/18, A47C 7/28, A47C 7/40, A47C 27/15, B60N 2/00

(54) **VEHICLE SEAT**

(30) Priority: 14.05.2002 JP 2002138497; 14.05.2002 JP 2002138498; 14.05.2002 JP 2002138499
(71) Applicant: TS Tech Co., Ltd, Asaka-shi, Saitama 351-0012 (JP); Honda Giken Kogyo Kabushiki Kaisha, Minato-ku, Tokyo 107-0062 (JP)
(72) Inventor: NAKAMURA, Mitsumasa, Meguro-ku, Tokyo 152-0031 (JP); FUKUDA, Takako, Nikko-shi, Tochigi 321-1423 (JP)
(74) Representative: Grünecker, Kinkeldey, Stockmair & Schwanhäusser Anwaltssozietät
(86) International application number: PCT/JP2003/005841
(87) International publication number: WO 2003/094667

(57) **Abstract**

In a vehicle seat (S) having a seating portion (10) and a backrest portion (20), the seating portion (10) and the backrest portion (20) are provided with base plates (12, 22) detachably mounted to a frame (40), blocks (13, 23), spring plates (14, 24), and skin covers (16, 26), the blocks (13, 23) are arranged so as to form a predetermined space between the base plates (12, 22) and the spring plates (14, 24), and the spring plates (14, 24) are formed by a foam having an elasticity, and are deflected into the space at a time when a force in a direction of the base plates (12, 22) is applied to the spring plates.

## Description

### TECHNICAL FIELD

The present invention relates to a vehicle seat, and more particularly to a lightweight vehicle seat which can be easily assembled, can intend to reduce a manufacturing cost, and is excellent in a recycling efficiency.

### BACKGROUND ART

In general, the vehicle seat has a seating portion and a backrest portion, and the seating portion and the backrest portion are respectively provided with vehicle seat frames respectively having predetermined shapes, cushion members (for example, urethane foam cushion members) supported to the frames and covering the frames so as to support a hip and a back of a seating passenger, and skin members for covering them.

Further, the assembly of the vehicle seat mentioned above is executed by coating the vehicle seat frame with the cushion member, in each of the seating portion and the backrest portion, and thereafter covering them by the skin members.

As mentioned above, it is necessary to apply the assembly of the vehicle seat to each of the seating portion and the backrest portion, so that there is a problem that a working difficulty and a quality non-uniformity are accompanied in a work of covering the cushion member by the skin member.

In specific, since the cushion member has an elasticity while being comparatively light, it is hard to handle the cushion member, and there is further a problem that a slip between the skin member and the cushion member is not good.

For example, in the case that the cushion member is covered by the skin member manually, since the slip between the skin member and the cushion member is not good, it is necessary to press the cushion member by a comparatively large force so as to compress the cushion member, thereby covering the cushion member while supporting the cushion member. Accordingly, a workability is not good.

Further, even in the case that the cushion member is covered by the skin member by using a machine, the cushion member is partly deformed in the covered state due to an inferior slip between both the elements, so that there is a problem that a dispersion is generated in a quality after being produced.

For example, in the case that a partly deformation of the cushion member in the covering work causes a shear droop or the like in a shoulder portion, a residuum is generated in a lower portion of the covered skin member, whereby a wrinkle and a sag are generated so as to cause a defective appearance of the product.

Further, once the vehicle seat is assembled, the skin member, the cushion member and the like can not be easily detached from the seat frame. Further, since the vehicle seat, particularly the cushion members of the seating portion and the backrest portion occupies a large volumetric capacity within the vehicle floor, these elements prevent the space for loading the baggage or the like within the vehicle floor from being secured.

In order to avoid the disadvantage mentioned above, as a technique for securing a sufficient loading space within the vehicle floor, there has been known as a technique of securing a space on the vehicle seat by making the backrest portion of the vehicle seat tiltable, and making the rear surface of the backrest portion flat with respect to the vehicle floor, and a technique of securing a space in the vehicle floor by making the vehicle seat detachable from the vehicle floor.

However, in the case of the technique of forming a predetermined space by tilting down the vehicle seat, since the volumetric capacity of the vehicle seat itself is large as mentioned above, there is a limit in securing the sufficient loading space.

Further, in the case of the technique of securing the loading space by detaching the vehicle seat from the vehicle floor, since the vehicle seat is heavy, there is a problem that a workability is deteriorated in the attaching and detaching work of the vehicle seat.

Further, in the case of sorting the vehicle seat frame, the cushion member, the skin member and the like made of different materials at a time of disposing the vehicle seat, it is inconvenient to carry out a work for separating the cushion member completely covered by the skin member from the skin member, and a work for separating the cushion member or the like from the vehicle frame, and a lot of labor hour is required for sorting. Accordingly, there is a problem that a recycling efficiency is inconvenient.

An object of the present invention is to provide a vehicle seat which can be easily assembled, is light and has an excellent recycling efficiency.

Another object of the present invention is to provide a vehicle seat which can secure a wide space in a vehicle in the case of mounting baggage or the like in the vehicle.

### DISCLOSURE OF THE INVENTION

A vehicle seat S in accordance with the present invention is characterized in that the vehicle seat S has a seating portion 10 provided with a base plate 12 detachably mounted to a seating frame 42, a block 13 arranged on the base plate 12, a spring plate 14 arranged on the block 13 and a skin cover 16 covering the spring plate 14, the block 13 is arranged so as to form a predetermined space between the base plate 12 and the spring plate 14, the spring plate 14 is formed by a foam having an elasticity, and the spring plate 14 is deflected into the space at a time when a force in a direction of the base plate 12 is applied to the spring plate 14.

Further, the vehicle seat S in accordance with the present invention is characterized in that in the vehicle seat S having the seating portion 10 and a backrest portion 20, the seating portion 10 and the backrest portion 20 are provided with the base plates 12 and 22 detachably mounted to the seating frame 42 and a backrest frame 44, the blocks 13 and 23 arranged on the base plates 12 and 22, the spring plates 14 and 24 arranged on the blocks 13 and 23, and the skin covers 16 and 26 covering the spring plates 14 and 24, the blocks 13 and 23 are arranged so as to form a predetermined space between the base plates 12 and 22 and the spring plates 14 and 24, the spring plates 14 and 24 are formed by the foam having an elasticity, and the spring plates 14 and 24 are deflected into the space at a time when the force in a direction of the base plates 12 and 22 is applied to the spring plates 14 and 24.

As mentioned above, the vehicle seat S in accordance with the present invention is structured such that the spring plates 14 and 24 are arranged apart from the base plates 12 and 22 by a plurality of blocks 13 and 23, in place of using the cushion member. Further, a cushion efficiency is secured by utilizing a leaf spring effect on the basis of the elasticity of the spring plates 14 and 24.

Accordingly, since it is not necessary to cover the cushion member by the skin member, an assembling work can be easily executed as is different from the conventional structure, and it is possible to achieve a weight saving and a compact structure.

Further, as the foam, it is possible to employ any one of PP (polypropylene) bead foam, PE (polyethylene) bead foam, PP foam, PE foam, AS resin (acrylonitrile styrene resin), EVA (ethylene polyvinyl acetate copolymer resin) and urethane foam material. The PP bead foam is excellent in a weather resistance, the PE bead foam is inexpensive, and the EVA and the urethane foam material are rich in flexibility. Accordingly, it is possible to select the different materials in correspondence to an intended use of the vehicle seat S.

Further, it is preferable that the blocks 13 and 23 are detachably mounted to the base plates 12 and 22 or the spring plates 14 and 24. In accordance with the structure mentioned above, it is possible to adjust a seating feeling in correspondence to a body type or the like of the seating passenger. In specific, it is possible to adjust a degree at which the spring plates 14 and 24 sink at a time of seating, by selecting the blocks 13 and 23 having the different heights and widths, whereby it is possible to provide an improved seating feeling in correspondence to the seating passenger.

Further, it is preferable that the skin covers 16 and 26 are detachably mounted to the seating frame 42 and the backrest frame 44. In the case that the skin covers 16 and 26 are mounted to the seating frame 42 and the backrest frame 44 by arranging mounting portions and locking portions in the skin covers 16 and 26, the seating frame 42 and the backrest frame 44, respectively, and locking them, it is easy to replace the skin covers 16 and 26, and it is possible to use the skin covers 16 and 26 having different designs in correspondence to a personal preference. Further, since a sorting work at a time of recycling is easily executed, the structure is preferable.

Further, the vehicle seat S in accordance with the present invention is characterized in that the vehicle seat S has the seating portion 10 provided with the base plate 12 detachably mounted to the seating frame 42, the block 13 arranged on the base plate 12, and the skin cover 16 covering the base plate 12 and the block 13, and a predetermined space is formed between the base plate 12 and the skin cover 16 by the block 13.

Further, the vehicle seat S in accordance with the present invention is characterized in that in the vehicle seat S having the seating portion 10 and the backrest portion 20, the seating portion 10 and the backrest portion 20 are provided with the base plates 12 and 22 detachably mounted to the seating frame 42 and the backrest frame 44, the blocks 13 and 23 arranged on the base plates 12 and 22, and the skin covers 16 and 26 covering the base plates 12 and 22 and the blocks 13 and 23, and the predetermined space is formed between the base plates 12 and 22 and the skin covers 16 and 26 by the blocks 13 and 23.

As mentioned above, the vehicle seat S in accordance with the present invention is structured such that the skin covers 16 and 26 are arranged apart from the base plates 12 and 22 by a plurality of blocks 13 and 23, in place of using the cushion member. Further, a cushion efficiency is secured by utilizing an elasticity obtained by the skin covers 16 and 26 and the blocks 13 and 23.

Accordingly, since it is not necessary to cover the cushion member by the skin member as is different from the conventional structure, an assembling work can be easily executed, and it is possible to achieve a weight saving and a compact structure.

Further, since the skin covers 16 and 26 are formed by a skin material including a surface elastic body, a genuine leather, an artificial leather and a fabric, the seating feeling of the vehicle seat S can be easily changed variously by selecting an appropriate skin material from the skin material having an elasticity such as the surface elastic body to the skin material hardly having the elasticity. Accordingly, this structure is preferable.

Further, it is preferable that the blocks 13 and 23 are detachably mounted to the base plates 12 and 22. In accordance with the structure mentioned above, it is possible to adjust the seating feeling in correspondence to the body type or the like of the seating passenger. In specific, it is possible to adjust a degree at which the skin covers 16 and 26 expand and sink at a time of seating, by selecting the blocks 13 and 23 having the different heights and widths, whereby it is possible to provide an improved seating feeling in correspondence to the seating passenger.

Further, it is preferable that the skin covers 16 and 26 are detachably mounted to the seating frame 42 and the backrest frame 44. In the case that the skin covers 16 and 26 are provided on the base plates 12 and 22 in a tensional manner by arranging mounting portions and locking portions in the skin covers 16 and 26, the seating frame 42 and the backrest frame 44, respectively, and locking them, it is easy to replace the skin covers 16 and 26, and it is possible to use the skin covers 16 and 26 having different designs in correspondence to a personal preference. Further, since a sorting work at a time of recycling is easily executed, the structure is preferable.

Further, the vehicle seat S in accordance with the present invention is characterized in that the vehicle seat S has the seating portion 10 provided with the frame-shaped seating frame 42, the plate portion (the base plate 12 and the spring plate 14 or the base plate 12) detachably mounted to the seating frame 42, and the skin cover 16 covering the plate portion and detachably mounted to the seating frame 42.

As mentioned above, since the constituting members of the seating portion 10 are structured such as to be detachable from the frame-shaped seating frame 42, only the frame-shaped seating frame 42 of the vehicle seat S can be exposed by detaching the constituting members. Accordingly, when loading a high loaded material on the vehicle floor in a rising state, the loaded material can be arranged within the frame-shaped seating frame 42 by detaching the constituting members.

Accordingly, only the loaded material having a height from a seating surface of the vehicle seat to a ceiling can be loaded conventionally, however, in accordance with the structure mentioned above, it is possible to load a loaded material having a height from the surface of the vehicle floor to the ceiling.

Further, the problem mentioned above can be solved by the vehicle seat S in accordance with the present invention, that is, the vehicle seat S having the seating portion 10 and the backrest portion 20, in which the seating portion 10 and the backrest portion 20 are provided with the frame-shaped seating frame 42, the backrest frame 44, the plates portions (the base plates 12 and 22 and the spring plates 14 and 24 or the base plates 12 and 22) detachably mounted to the seating frame 42 and the backrest frame 44, and the skin covers 16 and 26 covering the plate portions and detachably mounted to the seating frame 42 and the backrest frame 44.

In accordance with the structure mentioned above, since only the frame-shaped seating frame 42 and the backrest frame 44 can be exposed by detaching the constituting members of the seating portion 10 and the backrest portion 20, it is possible to arrange the loaded material within the frame-shaped seating frame 42 and the backrest frame 44. At this time, since the loaded material can be easily fixed to the frame-shaped seating frame 42 and the backrest frame 44, the loaded material can be stably carried. Accordingly, the structure is preferable.

Further, in two vehicle seats S in a longitudinal direction, a long-shaped loaded material can be arranged through both the backrest frames 44, by detaching the constituting members of the backrest portion 20. Accordingly, the structure is preferable.

Further, it is preferable that the vehicle seat S has a headrest portion 30 positioned in an upper portion of the backrest portion 20, the headrest portion 30 is provided with a frame-shaped headrest frame 46, and a plate portion (a base plate 32) detachably mounted to the headrest frame 46, the headrest frame 46 of the headrest portion 30 is detachably mounted to a headrest frame mounting portion 44b arranged in the backrest frame 44 of the backrest portion 20, and the headrest frame 46 of the headrest portion 30 can be mounted to the headrest frame mounting portion 44b such that an approximately whole of the headrest frame 46 of the headrest portion 30 is positioned within a range surrounded by the backrest frame 44 of the backrest portion 20.

In accordance with the structure mentioned above, the mounting space can be easily secured in the upper portion of the vehicle seat S, by detaching the headrest portion 30 at a time of loading the loaded material on the vehicle floor.

Further, in the case that the headrest frame 46 of the headrest portion 30 is positioned within the backrest frame 44 of the backrest portion 20, in a state in which the constituting members of the backrest portion 20 are detached, it is possible to load and carry the loaded material in a further stable state, for example, by pressing the loaded material arranged within the backrest frame 44 by the headrest frame 46 of the headrest portion 30. Further, it is possible to mount the headrest frame 46 of the headrest portion 30 in an opposite direction so as to arrange an elongated loaded material through the headrest frame 46. Accordingly, the structure is preferable.

Further, in the case that the seating portion 10 can be flipped up, the high loaded material can be arranged in a front portion of the vehicle seat S in a rising state under a condition that the seating portion 10 is flipped up. Accordingly, the structure is preferable.

Further, the plate portion can employ any one of PP (polypropylene) bead foam, PE (polyethylene) bead foam, PP foam, PE foam, AS resin (acrylonitrile styrene resin), EVA (ethylene polyvinyl acetate copolymer resin) and urethane foam material or a combination thereof. The PP bead foam is excellent in a weather resistance, the PE bead foam is inexpensive, and the EVA and the urethane foam material are rich in flexibility. Accordingly, it is possible to select the different materials in correspondence to an intended use of the vehicle seat S, and it is possible to achieve a weight saving of the vehicle seat S. Accordingly, the structure is preferable.

### BRIEF DESCRIPTION OF THE DRAWINGS

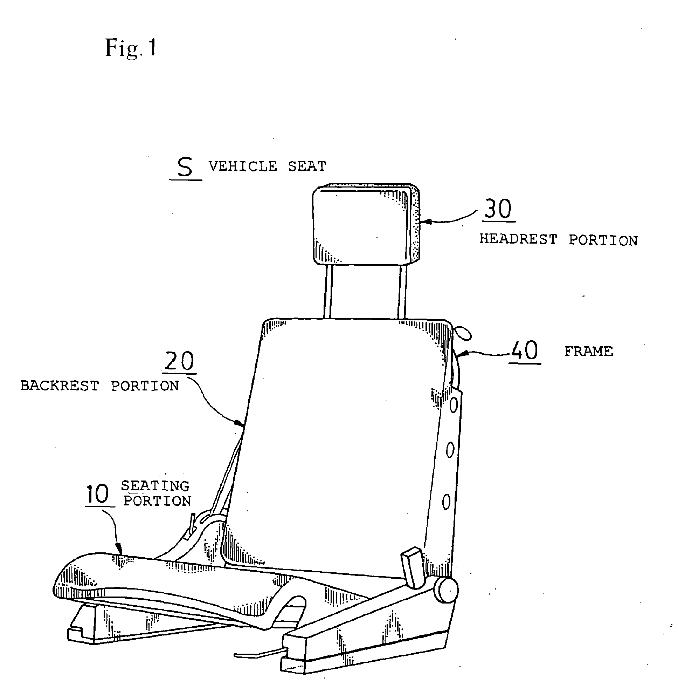

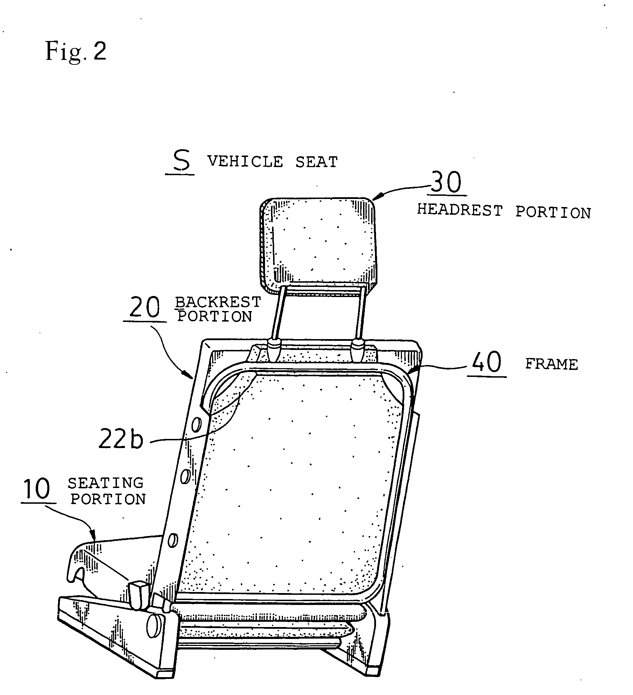

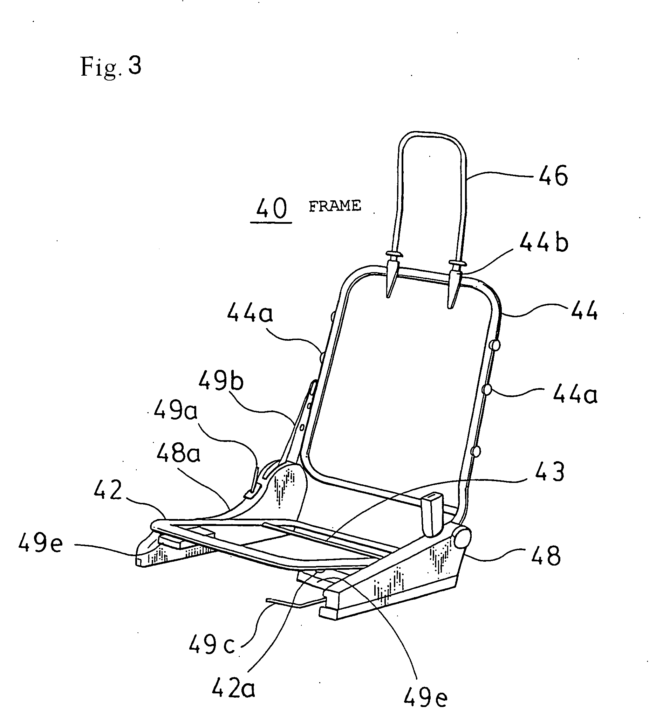

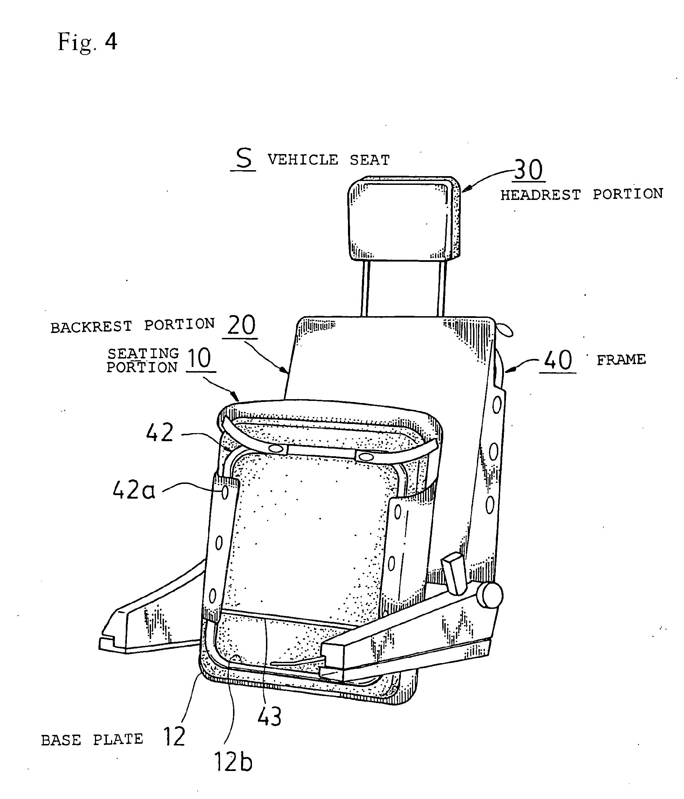

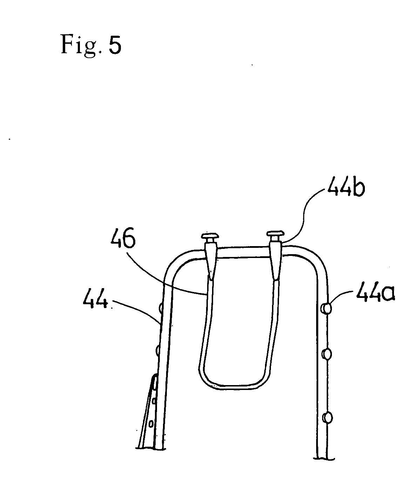

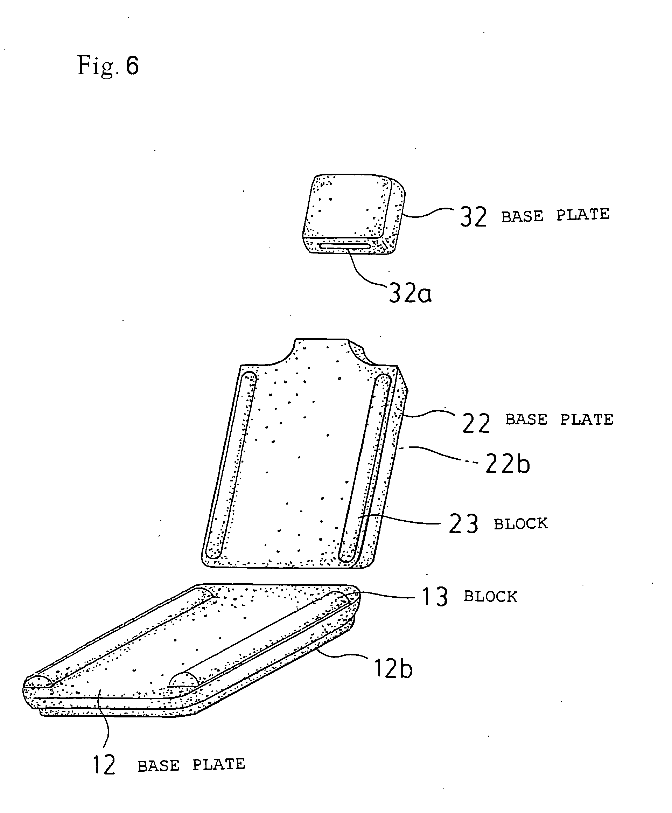

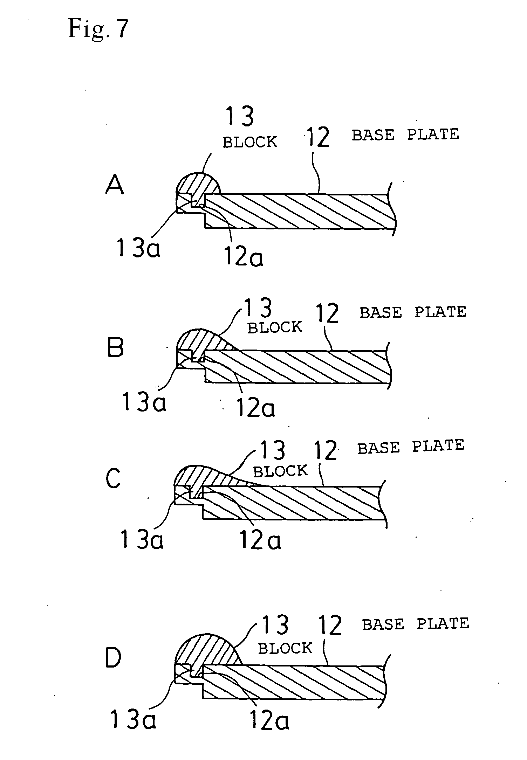

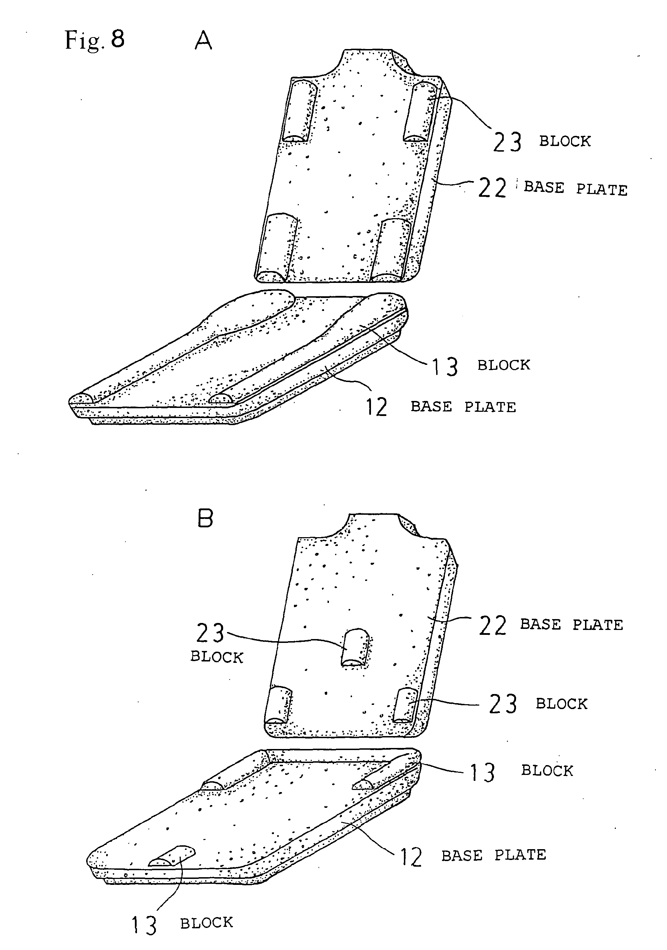

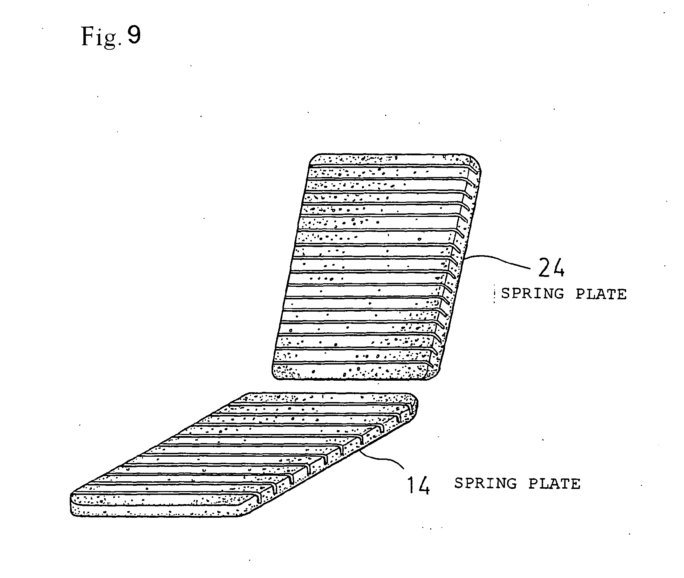

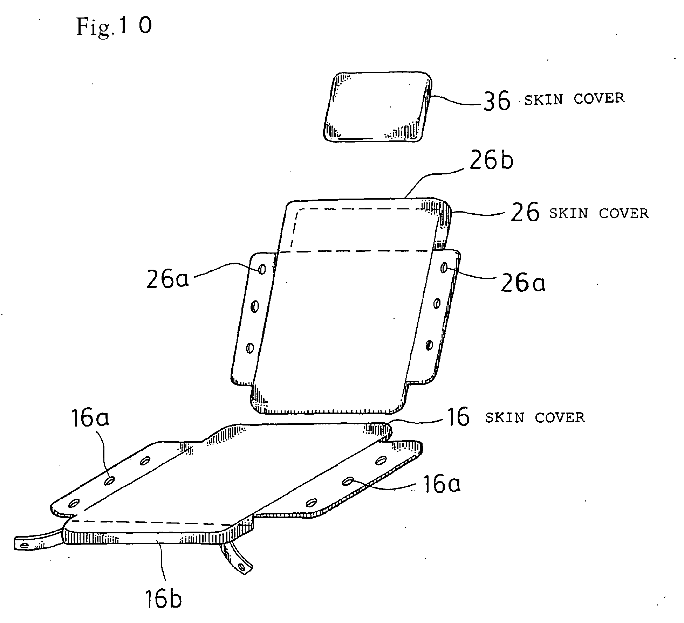

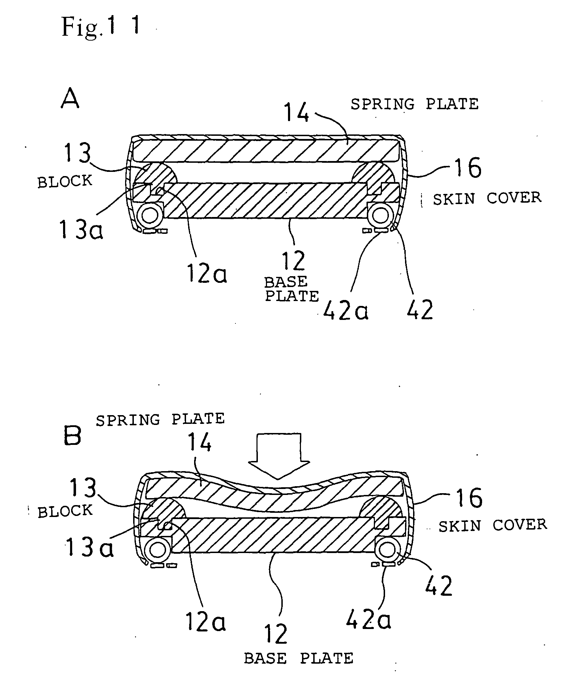

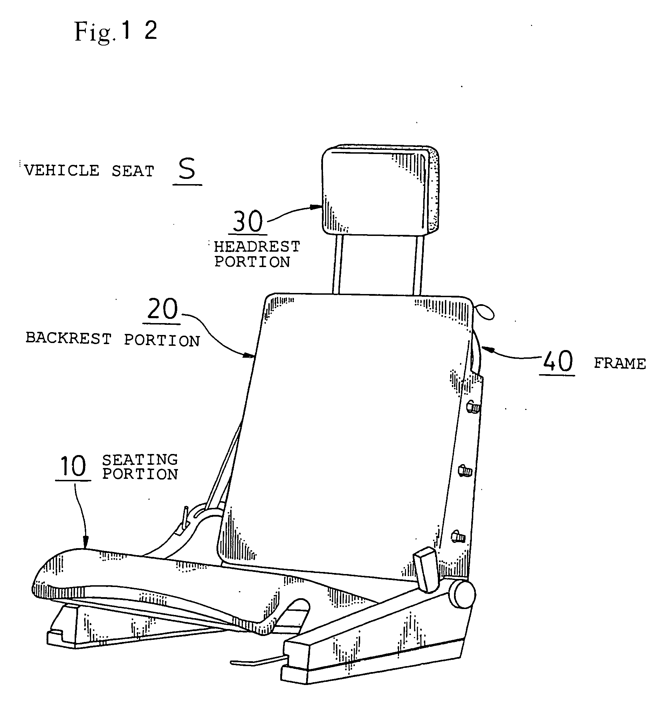

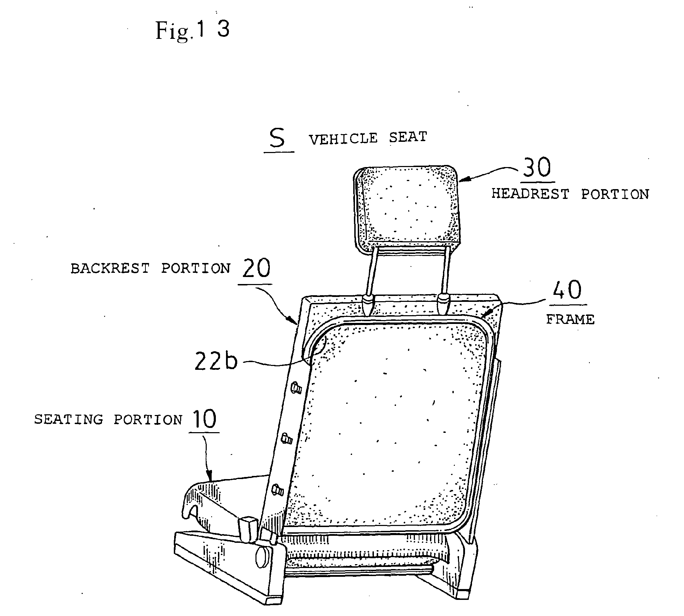

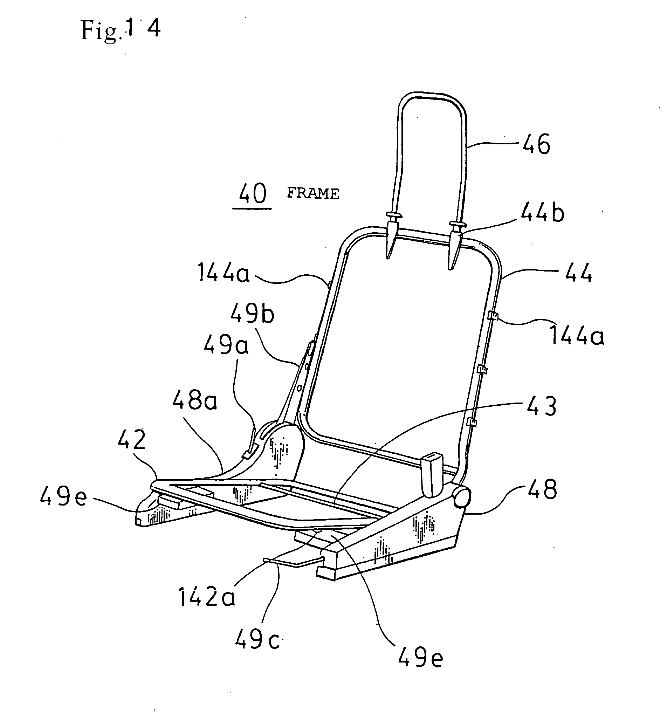

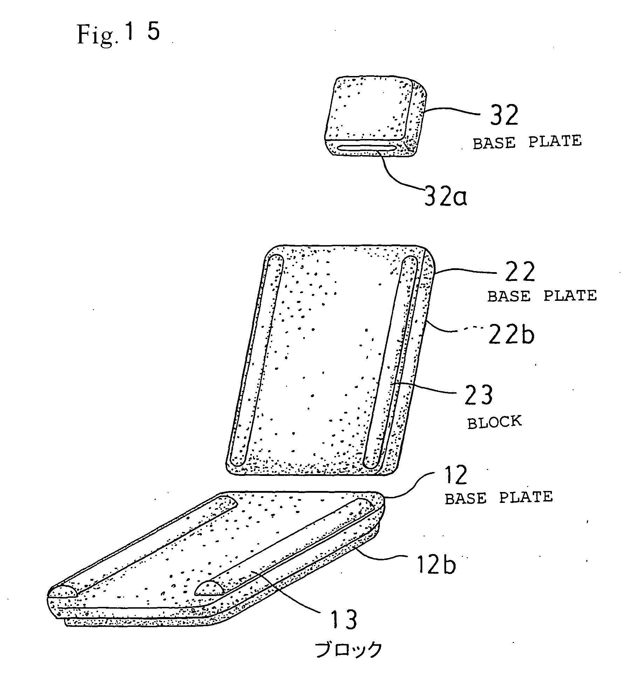

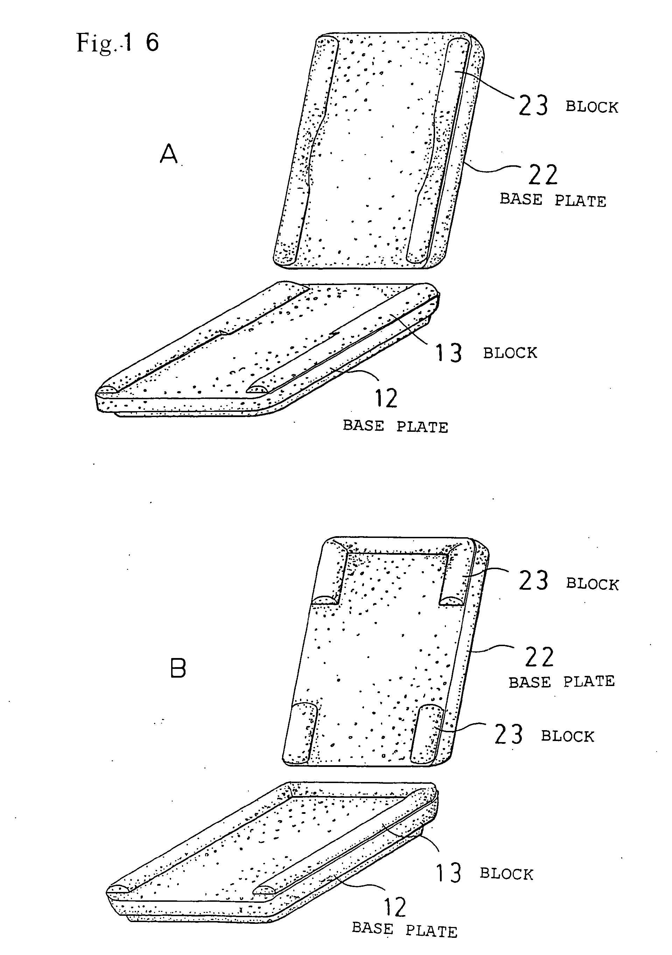

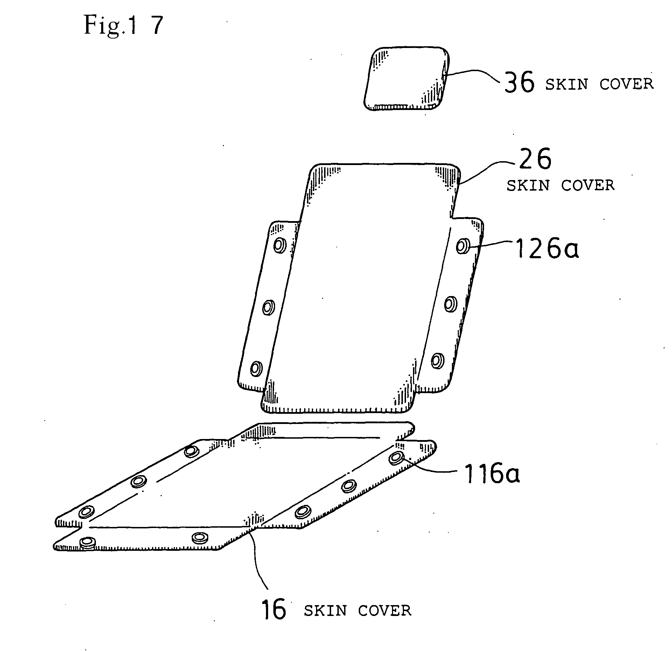

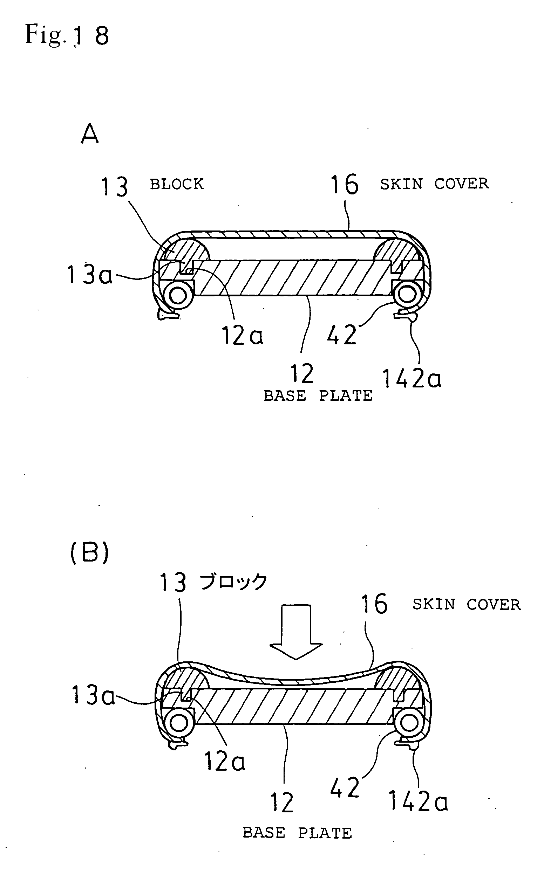

Figs. 1 to 11 relate to a vehicle seat in accordance with a first embodiment, in which Fig. 1 is a forward perspective view of the vehicle seat, Fig. 2 is a rearward perspective view of the vehicle seat, Fig. 3 is a perspective view of a frame of the vehicle seat, Fig. 4 is a perspective view of a state in which seating portion of the vehicle seat is flipped up, Fig. 5 is an explanatory view of the frame of the vehicle seat, Fig. 6 is an explanatory view of a base plate of the vehicle seat, Fig. 7 is a partly cross sectional view of the base plate of the vehicle seat, Fig. 8 is an explanatory view of another embodiment of the base plate of the vehicle seat, Fig. 9 is an explanatory view of a spring plate of the vehicle seat, Fig. 10 is an explanatory view of a skin cover of the vehicle seat, and Fig. 11 is a cross sectional view of a seating portion of the vehicle seat.

Further, Figs. 12 to 18 relate to a vehicle seat in accordance with a second embodiment, in which Fig. 12 is a forward perspective view of the vehicle seat, Fig. 13 is a rearward perspective view of the vehicle seat, Fig. 14 is a perspective view of a frame of the vehicle seat, Fig. 15 is an explanatory view of a base plate of the vehicle seat, Fig. 16 is an explanatory view of another embodiment of the base plate of the vehicle seat, Fig. 17 is an explanatory view of a skin cover of the vehicle seat, and Fig. 18 is a cross sectional view of a seating portion of the vehicle seat.

### BEST MODE FOR CARRYING OUT THE INVENTION

A description will be given of embodiments in accordance with the present invention with reference to the accompanying drawings. In this case, members, arrangements and the like described below do not limit the present invention, and can be variously modified within a range of a scope of the present invention.

A vehicle seat S in accordance with a first embodiment of the present invention is provided with a seating portion 10, a backrest portion 20 and a headrest portion 30, as shown in Figs. 1 and 2, these members are mounted to a metal frame 40. In this case, the vehicle seat S shown in Fig. 1 is for a right seat, and the vehicle seat S for a left seat is structured to be symmetrical to the vehicle seat in Figs. 1 and 2.

The frame 40 is provided with a seating frame 42, a backrest frame 44, a headrest frame 46 and a side frame 48, as shown in Fig. 3.

The side frame 48 is constituted by right and left structure portions, a reclining mechanism is provided in the structure portion positioned in a right side of a seating passenger in the vehicle seat S shown in Fig. 1, and a lock mechanism of a seating portion slide mechanism is provided in the structure portion positioned in a left side. Further, these elements are covered by a synthetic resin side cover 48a.

Further, the vehicle seat S is mounted to a vehicle floor by four attaching mounts arranged in a lower portion of the side frame 48.

In the reclining mechanism mentioned above, when a reclining strap 49a extended from the side cover 48a is pulled, a lock of a frame support plate 49b is detached, and the reclining of the backrest portion 20 can be adjusted via the frame support plate 49b. Further, in the seating portion slide mechanism, the lock is detached by operating a slide lever 49c, and the seating portion 10 can be adjusted in a position in a longitudinal direction.

The seating frame 42 is an approximately rectangular ring frame formed by a metal pipe, is mounted so as to be freely flipped up around a mounting support shaft 43 pivotally supported between both the side frames 48, and is supported by a locking portion 49e mounted to the side frame 48 at a seating position.

Further, as shown in Fig. 4, the vehicle seat S can maintain the state in which the seating portion 10 is flipped up, even in a state in which the other structure members are assembled to the frame 40.

Further, in the present embodiment, as shown in Figs. 3 and 4, eight mounting projections 42a for mounting a skin cover are arranged in the lower side of the seating frame 42. In this case, the mounting projections 42a may be arranged in an outer side or an inner side of the seating frame 42.

The backrest frame 44 is an approximately rectangular ring frame formed by the metal pipe in the same manner as the seating frame 42, and is screwed and fastened to the frame support plate 49b in a left side lower portion in the drawing. A right lower end portion of the backrest frame 44 in the drawing is mounted to a support shaft (not shown) within the side cover 48a.

Further, in the present embodiment, six mounting projections 44a for mounting the skin cover are arranged in an out side of the backrest frame 44. In this case, the mounting projections 44a may be arranged in a rear side or an inner side of the backrest frame 44.

The headrest frame 46 is a U-shaped frame made of metal, and is fastened and fixed to a headrest frame mounting portion 44b arranged in an upper portion of the backrest frame 44 in a state of being inserted thereto. Further, a height of the headrest frame 46 can be adjusted in accordance with an inserted length.

Further, as shown in Fig. 5, the headrest frame 46 can be fixed to the headrest frame mounting portion 44b by being inserted thereto from an opposite direction, in a state in which a base plate 22 mentioned below is not mounted, whereby it is possible to secure a space for loading a baggage on the backrest frame 44.

Further, in the present embodiment, the headrest frame 46 is bent slightly in an L-shape in the middle of a vertical direction, however, the structure is not limited to this, and it is not necessary to be bent in the middle of the vertical direction. In this case, it is possible to press the headrest frame 46 to the backrest frame 44 until a portion near a horizontal portion of the headrest frame 46, and it is easy to secure the space in the upper portion of the vehicle seat S. Accordingly, the structure is preferable.

Next, a description will be given of the seating portion 10, the backrest portion 20 and the headrest portion 30 arranged in the frame 40. The seating portion 10 is structured such that the base plate 12 and a spring plate 14 serving as the plate portion shown in Figs. 6 to 10, and a skin cover 16 are mounted to the seating frame 42.

Further, the backrest portion 20 is structured, in the same manner, such that a base plate 22 and a spring plate 24 serving as the plate portion, and a skin cover 26 are mounted to the backrest frame 44. Further, the headrest portion 30 is structured such that a base plate 32 serving as the plate portion, and a skin cover 36 are mounted to the headrest frame 46.

The base plates 12, 22 and 32, and the spring plates 14 and 24 are formed by a foam such as PP (polypropylene) bead foam, PE (polyethylene) bead foam, PP foam, PE foam, AS resin (acrylonitrile styrene resin), EVA (ethylene polyvinyl acetate copolymer resin) and urethane foam material.

As shown in Fig. 6, the base plates 12, 22 and 32 are constituted by an approximately rectangular plate-shaped foam. Convex blocks 13 and 23 formed by the same foam and having an approximately semicircular cross sectional shape are arranged in both right and left end portions of surfaces of the base plates 12 and 22. Further, step portions 12b and 22b respectively for fitting to frame inner sides of the seating frame 42 and the backrest frame 44 are formed on back surfaces of the base plates 12 and 22.

Further, a mounting hole 32a is provided in a lower portion of the base plate 32, and the base plate 32 is mounted to the headrest frame 46 by inserting the U-shaped portion of the headrest frame 46 to the mounting hole 32a.

In the base plates 12 and 22 in accordance with the present embodiment, the blocks 13 and 23 are respectively detachable. Fig. 7A shows a partly sectional view of the base plate 12. As illustrated, a mounting groove 12a is formed on a surface of the base plate 12, and the block 13 is easily mounted to the base plate 12 by fitting a mounting projection 13a of the block 13 to the mounting groove 12a. This is the same about the block 23 and the base plate 22.

The base plates 12 and 22, the blocks 13 and 23 and the like are formed by injecting a foam resin into a metal mold, however, an inverse brain corner molding is formed about one to some times in the mounting groove 12a and the mounting projection 13a by utilizing an elasticity of the foam resin. In other words, a cross section of the mounting groove 12a is expanded toward a bottom surface, and the mounting projection 13a is formed such that a cross section thereof is expanded toward a leading end.

In the case that the mounting groove 12a and the mounting projection 13a are formed in this manner, both the elements are easily separated at a time of integrally assembling the base plate 12 and the block 13. Accordingly, this structure is preferable.

Further, as exemplified in Figs. 7B to 7D, the blocks 13 and 23 can be approximately selected from the blocks having different heights and widths. As mentioned above, since the shape of the mounting projection 13a is uniform even if the height and the width are different, it is possible to replace the blocks 13 and 23 in correspondence to a body type of the seating passenger. In this case, in the present embodiment, the blocks 13 and 23 are structured to be detachable, however, may be integrally formed with the base plates 12 and 22.

Further, in the present embodiment, the blocks 13 and 23 are formed by the foam , however, the structure is not limited to this, if the base plates 12 and 22 and the spring plates 14 and 24 can be separated as mentioned below, the blocks may be made of hard resin, rubber or metal and the like.

Further, in the present embodiment, the semicircular blocks 13 and 23 are arranged along both the right and left end portions of the base plates 12 and 22, however, the structure is not limited to this, and as exemplified in Figs. 8A and 8B, variously shaped blocks 13 and 23 may be arranged in some positions on the surfaces of the base plates 12 and 22. In other words, any structure may be employed as far as it is possible to obtain a cushioning efficiency which can apply an improved seating feeling to the seating passenger, as mentioned below.

As shown in Fig. 9, the spring plates 14 and 24 are constituted by a plate-shaped foam having an approximately rectangular outer shape. A plurality of grooves are formed in a horizontal direction in a side of front surfaces of the spring plates 14 and 24, whereby a cushioning efficiency can be obtained as well as an air permeability, and a seating feeling is improved.

Further, the recess portions (not shown) for positioning with the base plates 12 and 22 are formed in a side of back surfaces of the spring plates 14 and 24. Both the elements can be easily positioned and both the elements are hard to be deflected by aligning the recess portions with the blocks 13 and 23.

The skin covers 16, 26 and 36 shown in Fig. 10 are mounted so as to cover the base plates 12, 22 and 32 and the spring plates 14 and 24. The skin covers 16, 26 and 36 are made of a known skin material such as a fabric, a genuine leather, an artificial leather and the like.

Covering portions 16b and 26b are respectively formed in the skin covers 16 and 26. The pouched covering portions 16b and 26b are formed such that one side is open, and is structured such that one end side of the spring plates 14 and 24 is fitted thereto. Accordingly, the skin covers 16 and 26, and the spring plates 14 and 24 are formed integrally, and both the elements are hard to be deflected.

Further, metal mounting rings 16a and 26a having mounting holes are formed at a plural of positions of the skin covers 16 and 26. The skin covers 16 and 26 can be fixed to the frames by fitting the mounting rings 16a and 26a to the mounting projections 42a and 44a arranged in the seating frame 42 and the backrest frame 44.

The mounting projections 42a and 44a and the mounting rings 16a and 26a are constituted by a known fastener. Further, in addition to the present embodiment, the fastener can employ various types of fasteners such as a button-shaped fastener, a buckle-shaped fastener, a clip-shaped fastener and the like.

Further, the skin cover 36 is mounted to the base plate 32 by a bonding means such as a surface-shaped fastener or the like. In this case, the structure may be made such that the skin cover is formed in a cushion shape which can be padded, thereby improving a cushioning efficiency.

Next, a description will be given of an assembly of the vehicle seat S in accordance with the first embodiment. First, the base plates 12 and 22 are arranged respectively in the seating frame 42 and the backrest frame 44 of the frame 40. At this time, they are arranged such that the step portions 12b and 22b of the back surface of the base plates 12 and 22 are fitted to inner sides of the seating frame 42 and the backrest frame 44.

Accordingly, the positions of the base plates 12 and 22 are fixed with respect to the seating frame 42 and the backrest frame 44, thereby being prevented from being deflected. Further, the base plate 32 is mounted to the headrest frame 46.

Further, the spring plates 14 and 24 are mounted to the skin covers 16 and 26 by inserting one end side of the spring plates 14 and 24 to the covering portions 16b and 26b.

Next, the spring plate 14 and the skin cover 16, and the spring plate 24 and the skin cover 26 which are respectively integrally mounted, are arranged at predetermined positions on the base plates 12 and 22. At this time, the blocks 13 and 23 of the base plates 12 and 22 and the back surface recess portions of the spring plates 14 and 24 are arranged in a state of being fitted.

Further, the mounting rings 16a and 26a of the skin covers 16 and 26 are respectively fitted to the mounting projections 42a and 44a of the seating frame 42 and the backrest frame 44. Further, the skin cover 36 is mounted to the base plate 32 by the surface-shaped fastener.

As mentioned above, in the vehicle seat S in accordance with the first embodiment, the seating portion 10 and the backrest portion 20 constituted by the foam correspond to so-called cushion board and back board, and form the structure bodies together with the seating frame 42 and the backrest frame 44.

Further, the vehicle seat S can be easily assembled by the seating passenger in the vehicle seat S as well as in the manufacturing process, by fitting the seating portion 10, the backrest portion 20 and the headrest portion 30 to the frame 40.

Accordingly, it is possible to widely improve an inferior workability in the conventional vehicle seat assembling work, and it is possible to intend to reduce a working time, prevent the product quality after being assembled from being dispersed, and prevent an outer appearance of the product from being deteriorated.

Further, in the vehicle seat S, since it is possible to easily replace the skin covers 16, 26 and 36, the user can employ various designs of skin covers 16, 26 and 36 in correspondence to his or her preference.

Further, in the vehicle seat S, the seating portion 10 can be flipped up as shown in Fig. 4. Accordingly, the baggage which is high in the vertical direction can be mounted on the front portion of the vehicle seat S in a state in which the seating portion 10 is flipped up. Further, in the case of detaching the skin cover 16, the spring plate 14 and the base plate 12 of the seating portion 10, the baggage which is high in the vertical direction can be mounted through the seating frame 42.

Further, in the case of detaching the skin cover 26, the spring plate 24 and the base plate 22 corresponding to the constituting members of the backrest portion 20, the baggage which is higher can be mounted. In other words, the baggage can be mounted by detaching the constituting members and passing the baggage through the backrest frame 44.

In this case, the baggage which is further higher can be mounted by detaching the constituting members of the front and rear vehicle seats S and passing the baggage through the back rest frames 44 in two front and rear vehicle seats S. At this time, in the case that the headrest frame 46 is mounted in an inverse direction as shown in Fig. 5, and the mounting height thereof is adjusted, the headrest frame 46 forms a support for holding the baggage passed through the backrest frame 44.

Further, an elongated loaded material can be arranged by detaching the skin cover 36 and the base plate 32 corresponding to the constituting members of the headrest portion 30 in the front and rear vehicle seat S and passing the elongated loaded material through two front and rear headrest frames 46.

At this time, the elongated loaded material may be arranged by detaching the constituting members of the backrest portion 20 in one or both of the front and rear vehicle seats S, setting the headrest frame 46 in an inverse mounted state as shown in Fig. 5, and passing the elongated loaded material through two front and rear headrest frames 46.

As mentioned above, in accordance with the vehicle seat of the first embodiment, since the constituting members of the seating portion 10, the backrest portion 20 and the headrest portion 30 are detachable, a sufficient baggage loading space can be secured even in the case that the vehicle floor is narrow. As this time, since the constituting members are easily detached and attached, and are light, a lot of labor hour for securing the loading space is not required. Accordingly, the structure is preferable. Further, it is possible to fix the loaded material to the frame, and it is possible to carry the loaded material in a stable state.

Further, the skin cover, the spring board and the base plate can be easily detached at a time of disposing the vehicle seat S, whereby it is easy to sort the vehicle seat. Accordingly, the vehicle seat S is excellent in a recycling efficiency.

Next, a description will be given of a condition at a time of seating on the vehicle seat S in accordance with the first embodiment, with reference to Fig. 11. The following description is given of the seating portion 10, however, the same description is applied to the backrest portion 20.

As shown in Fig. 11A, the spring plate 14 is mounted on the block 13, and is covered by the skin cover 16. Accordingly, the spring plate 14 and the base plate 12 are structured such as to be apart from each other at a height of the block 13.

Further, the spring plate 14 mounted on the right and left blocks 13 is constituted by a plate-like foam having an elasticity. Accordingly, when the seating passenger seats on the vehicle seat S having the structure mentioned above, the spring plate 14 between the right and left blocks 13 deflects and sinks down, as shown in Fig. 11B.

At this time, a predetermined impact resilient force on the basis of a leaf spring effect of the spring plate 14, and an elastic force of the spring plate 14 itself are applied to the hip or the like of the seating passenger, whereby an improved seating feeling is applied to the seating passenger.

In this case, since the spring plate 14 sinks down, an inward friction force in a horizontal direction is applied to the block 13 with respect to the spring plate 14. The friction force forms a force in a direction of pulling out the block 13 from the base plate 12.

Accordingly, it is desirable that the block 13 is structured such as to have a certain degree of width in the horizontal direction or a film or the like for improving a sip is stuck to a contact portion with the spring plate 14, in order to prevent the block 13 from being pulled out.

Further, it is possible to obtain an improved seating feeling personally by approximately selecting the blocks 13 having the different heights in correspondence to the body type of the user for the vehicle seat S. Since the block 13 can be easily attached to and detached from the base plate 12, it is easy to easily carry out the personal adjustment.

Further, since a plurality of grooves in the horizontal direction are formed in the front surface side of the spring plate 14, in the case that the fabric having the air permeability is used for the skin cover 16, a suitable air permeability can be obtained. Accordingly, a body temperature from the user is not taken to a contact portion between the user and the vehicle seat S and no uncomfortable feeling is applied to the seating passenger even in the case that the seating passenger seats for a long time.

Further, since the spring plate 14 is formed by the foam having a heat insulating efficiency, no uncomfortable feeling is applied to the user even if the skin cover 16 is made of the material having a good air permeability.

Further, in order to make the spring plate 14 to easily sink down at a time of seating, a vent hole may be provided in the base plate 12. In accordance with the structure mentioned above, it is possible to prevent a noise from being generated at a time when the air is deflated at the seating time, as well as a suitable sinking feeling can be obtained.

As mentioned above, the vehicle seat S in accordance with the first embodiment is structured such that the spring plates 14 and 24 are respectively mounted on the blocks 13 and 14, for the purpose of securing a cushioning efficiency at a time of seating, and utilizes the leaf spring effect of the spring plates 14 and 24.

Accordingly, it is possible to achieve a weight saving of the vehicle seat S without independently arranging the cushion member, and it is possible to make the vehicle seat S itself compact. Further, the bead foam is used as the foam, it is possible to improve an impact absorbing performance.

In this case, the headrest portion 30 is accordance with the present embodiment is constituted by the base plate 32 and the skin cover 36, however, may be structured such that the spring plate is arranged between the base plate 32 and the skin cover 36 in addition to the base plate 32 and the skin cover 36, in the same manner as the seating portion 10 and the backrest portion 20.

In this case, since a suitable cushioning feeling can be obtained in the headrest portion 30 by arranging the block in the base plate 32, the structure is preferable.

Further, in accordance with the first embodiment, the structure is made such that the spring plates 14 and 24 are directly covered by the skin covers 16 and 26, however, a cushion plate may be provided independently between these elements. In this case, since the cushioning performance is further increased, it is possible to intend to improve a seating feeling.

Further, in accordance with the present embodiment, the blocks 13 and 23 are provided in the base plates 12 and 22, however, the blocks 13 and 23 may be provided on the back surfaces of the spring plates 14 and 24 in place of being provided in the base plates 12 and 22.

Further, the base plates 12 and 22 in accordance with the first embodiment are formed by the foam, however, the structure is not limited to this, and the base plates 12 and 22 may be formed by a hard resin plate or the like.

Further, in the first embodiment, the base plates 12 and 22 are used, however, the structure may be made such that mounting portions for arranging the blocks 13 and 23 in the frame 40 are independently formed, the blocks 13 and 23 are arranged in the mounting portion, and the spring plates 14 and 24 are mounted thereon, in place of using the base plates 12 and 22.

Further, the vehicle seat S in accordance with the first embodiment is provided with the seating portion 10, the backrest portion 20 and the headrest portion 30, however, may be structured such as to be provided only with the seating portion 10, or only with the seating portion 10 and the backrest portion 20.

Next, a description will be given of a second embodiment in accordance with the present invention. In this case, the same reference numerals are attached to the same constituting elements of the first embodiment, and an overlapping description will be omitted. In the same manner as the first embodiment, a vehicle seat S in accordance with the second embodiment is provided with the seating portion 10, the backrest portion 20 and the headrest portion 30, as shown in Figs. 12 and 13, and these elements are mounted to the metal frame 40.

Further, in the second embodiment, as shown in Fig. 14, eight buckles 142a for mounting the skin cover are arranged in the lower side of the seating frame 42. In this case, the buckles 142a may be arranged in the outer side or the inner side of the seating frame 42.

Further, six buckles 144a for mounting the skin cover are arranged in the outer side of the backrest frame 44. In this case, the buckles 144a may be arranged in the rear side or the inner side of the backrest frame 44.

As shown in Figs. 15 to 17, the seating portion 10, the backrest portion 20 and the headrest portion 30 of the vehicle seat S in accordance with the second embodiment are respectively constituted by the base plates 12, 22 and 32 and the skin covers 16, 26 and 36.

Further, the skin covers 16, 26 and 36 shown in Fig. 17 are mounted so as to cover the base plates 12, 22 and 32 in the same manner as the first embodiment. The skin covers 16, 26 and 36 are formed by the known skin material such as the fabric, the genuine leather, the artificial leather and the like.

Further, in the second embodiment, the skin covers 16, 26 and 36 may be formed by a surface-shaped elastic body of a stretch fabric. As the surface-shaped elastic body, there can be employed, for example, a structure formed by a plurality of elastomer monofilament combined weaving a plurality of strands constituted by fiber yarns used for an interior woven fabric or a woven fabric or a knit fabric to which an elasticity is applied by using an elastomer monofilament of 1000 to 4000 denier for a warp yarn or a weft yarn.

Further, some metal locking holes 116a and 126a are respectively formed in the skin covers 16 and 26. The skin covers 16 and 26 are provided in the frame at a predetermined tension by locking the locking holes 116a and 126a by pull-down type buckles 142a and 144a arranged in the seating frame 42 and the backrest frame 44.

In this case, in the second embodiment, the buckles 142a and 144a and the locking holes 116a and 126a for making it easy to apply a predetermined tension to the skin covers 16 and 26 are structured such as to be of the pull-down type, however, the structure is not limited to this, the buckles 142a and 144a may employ a known faster such as a fitting type fastener, a button type fastener, a clip type fastener and the like.

Further, the locking holes 116a and 126a are not limited to the structures which are directly mounted to the skin covers 16 and 26, but may be provided in a leading end portion of a length adjusting band mounted to the skin covers 16 and 26.

In accordance with the structure mentioned above, the skin covers 16 and 26 can be provided at the suitable tension by adjusting the length adjusting band even at a time of changing the heights or the like of the blocks 13 and 23 as mentioned below.

Next, a description will be given of an assembly of the vehicle seat S in accordance with the second embodiment. First, the base plates 12 and 22 are arranged respectively in the seating frame 42 and the backrest frame 44 of the frame 40. At this time, they are arranged such that the step portions 12b and 22b of the back surface of the base plates 12 and 22 are fitted to inner sides of the seating frame 42 and the backrest frame 44, in the same manner as the first embodiment.

Accordingly, the positions of the base plates 12 and 22 are fixed with respect to the seating frame 42 and the backrest frame 44, thereby being prevented from being deflected. Further, the base plate 32 is mounted to the headrest frame 46.

Next, the skin covers 16 and 26 are respectively arranged on the base plates 12 and 22, thereby engaging the locking holes 116a and 126a with the buckles 142a and 144a. Further, the skin cover 36 is mounted to the base plate 32 by the surface-shaped fastener.

As mentioned above, in the vehicle seat S in accordance with the second embodiment, the seating portion 10 and the backrest portion 20 constituted by the foam form the so-called cushion board and back board, and form the structure bodies together with the seating frame 42 and the backrest frame 44.

Further, in the second embodiment, the vehicle seat S can be easily assembled by fitting the seating portion 10, the backrest portion 20 and the headrest portion 30 to the frame 40.

Accordingly, it is possible to widely improve an inferior workability in the conventional vehicle seat assembling work, and it is possible to intend to reduce a working time, prevent the product quality after being assembled from being dispersed, and prevent an outer appearance of the product from being deteriorated.

Further, in the vehicle seat S in accordance with the second embodiment, since it is possible to easily replace the skin covers 16, 26 and 36, the user can employ various designs of skin covers 16, 26 and 36 in correspondence to his or her preference.

Further, in the second embodiment, the skin cover and the base plate can be easily detached at a time of disposing the vehicle seat S, whereby it is easy to sort the vehicle seat. Accordingly, the vehicle seat S is excellent in a recycling efficiency.

Next, a description will be given of a condition at a time of seating on the vehicle seat S, with reference to Fig. 18. As shown in Fig. 18A, the skin cover 16 is structured such as to be apart from the base plate 12 at a height of the block 13, by the block 13 arranged in the base plate 12. Further, the skin cover 16 is provided at a predetermined tension by locking the buckle 142a with the locking hole 116a.

In accordance with the structure mentioned above, when the seating passenger seats on the vehicle seat S, the skin cover 16 between the right and left blocks 13 expands in the horizontal direction in correspondence to the material, and the upper portions of the right and left blocks 13 are exposed to the compression force so as to be compressed reversibly.

At this time, a predetermined cushioning efficiency is applied to the hip or the like of the seating passenger on the basis of the tension of the skin cover 16, whereby an improved seating feeling is applied to the seating passenger.

The cushioning efficiency is variously different in correspondence to the material used for the skin cover 16. For example, in the case of the skin material hardly having the elasticity such as a denim skin material, a hard seating feeling is obtained, and in the case of the skin material having a large elasticity such as a surface-shaped elastic body, a soft seating feeling can be obtained.

In this case, when the skin cover 16 is stretched while being pressed in a downward direction at a time of seating, an inward friction force in a horizontal direction is applied to the contact surface of the block 13 with the skin cover 16. The friction force forms a force in a direction of pulling out the block 13 from the base plate 12.

Accordingly, it is desirable that the block 13 is structured such as to have a certain degree of width in the horizontal direction or a film or the like for improving a slip is stuck to the contact portion with the skin cover 16, in order to prevent the block 13 from being pulled out.

Further, since the base plate 12 is formed by the foam having a heat insulating efficiency, no uncomfortable feeling is applied to the user even if the skin cover 16 is made of the material having a good air permeability.

Further, in order to prevent the noise from being generated by the air deflated from the portion between the base plate 12 and the skin cover 16 in the case that the skin cover 16 is expanded and contracted at a time of seating, a vent hole may be provided in the base plate 12, in the same manner as the first embodiment.

As mentioned above, the vehicle seat S in accordance with the second embodiment is structured such that the skin covers 16 and 26 are respectively mounted on the blocks 13 and 23, for the purpose of securing a cushioning efficiency at a time of seating, and utilizes the tension of the skin covers 16 and 26.

Accordingly, it is possible to achieve a weight saving of the vehicle seat S without independently arranging the cushion member, and it is possible to make the vehicle seat S itself compact.

Further, the vehicle seat S in accordance with the second embodiment is provided with the seating portion 10, the backrest portion 20 and the headrest portion 30, however, may be structured such as to be provided only with the seating portion 10, or only with the seating portion 10 and the backrest portion 20.

### INDUSTRIAL APPLICABILITY

As mentioned above, in accordance with the vehicle seat of the present invention, since the structure is made such that the base plates and the spring plates are mounted on the metal frames and these elements are covered by the skin covers from the upper portion, or the structure may be made such that the base plates are mounted on the metal frames and these elements are covered by the skin covers from the upper portion, the assembling work can be easily carried out, and it is possible to improve a manufacturing efficiency.

Further, since the base plates, the spring plates and skin covers corresponding to the constituting members of the vehicle seat can be easily detached from the frame and sorted, the recycling efficiency can be improved and it is possible to intend to effectively utilize the resource.

Further, since the seating portion can be flipped up, the high loaded material can be arranged by flipping up the seating portion at a time of loading the baggage. Further, the loaded material can be arranged in a state of passing through the frame, by attaching and detaching the base plate, the spring plate and the skin cover corresponding to the constituting members of the vehicle seat to and from the frame, and the mounting space can be secured even in the case that the vehicle floor is narrow.

Further, in the case that the bead foam
or the like is used as the base plate and the spring plate, a weight saving can be achieved as well as an excellent impact resistance can be obtained.

Further, since the cushioning effect of the vehicle seat utilizes the leaf spring effect of the spring plate mounted on a plurality of blocks or the elasticity of the skin cover provided in a tensional manner on a plurality of blocks, in place of using the cushion member, it is possible to achieve the weight saving of the vehicle seat.

## Claims

1. A vehicle seat having a seating portion provided with a base plate detachably mounted to a seat frame, a block arranged on said base plate, a spring plate arranged on said block and a skin cover covering said spring plate,
wherein said block is arranged so as to form a predetermined space between said base plate and said spring plate,
wherein said spring plate is formed by a foam having an elasticity, and
wherein said spring plate is deflected into said space at a time when a force in a direction of said base plate is applied to the spring plate.

2. A vehicle seat having a seating portion and a backrest portion,
wherein said seating portion and the backrest portion are provided with base plates detachably mounted to seat frames, blocks arranged on said base plates, spring plates arranged on said blocks, and skin covers covering said spring plates,
wherein said blocks are arranged so as to form a predetermined space between said base plates and said spring plates,
wherein said spring plates are formed by a foam having an elasticity, and
wherein said spring plates are deflected into said space at a time when a force in a direction of said base plates is applied to the spring plates.

3. A vehicle seat as claimed in claim 1 or 2, wherein said foam is formed by any one of PP (polypropylene) bead foam, PE (polyethylene) bead foam, PP foam, PE foam, AS resin (acrylonitrile styrene resin), EVA (ethylene polyvinyl acetate copolymer resin) and urethane foam material.

4. A vehicle seat as claimed in claim 1 or 2, wherein said blocks are detachably mounted to said base plates or the spring plates.

5. A vehicle seat as claimed in claim 1 or 2, wherein said skin covers are detachably mounted to said frames.

6. A vehicle seat having a seating portion provided with a base plate detachably mounted to a seat frame, blocks arranged on said base plate, and a skin cover covering said base plate and said blocks,
wherein a predetermined space is formed between said base plate and said skin cover by said blocks.

7. A vehicle seat having a seating portion and a backrest portion,
wherein said seating portion and the backrest portion are provided with base plates detachably mounted to seat frames, blocks arranged on said base plates, and skin covers covering said base plates and said blocks, and
wherein a predetermined space is formed between said base plates and said skin covers by said blocks.

8. A vehicle seat as claimed in claim 6 or 7, wherein said skin covers are formed by a skin material including a surface elastic body, a genuine leather, an artificial leather and a fabric.

9. A vehicle seat as claimed in claim 6 or 7, wherein said blocks are detachably mounted to said base plates.

10. A vehicle seat as claimed in any one of claims 6 to 8, wherein said skin covers are detachably mounted to said frames.

11. A vehicle seat having a seating portion provided with a frame-shaped frame, a plate portion detachably mounted to said frame, and a skin cover covering said plate portion and detachably mounted to said frame.

12. A vehicle seat having a seating portion and a backrest portion,
wherein said seating portion and the backrest portion are provided with frame-shaped frames, plate portions detachably mounted to said frames, and skin covers covering said plate portions and detachably mounted to said frames.

13. A vehicle seat as claimed in claim 12, wherein said vehicle seat has a headrest portion positioned in an upper portion of said backrest portion,
wherein said headrest portion is provided with a frame-shaped frame, and a plate portion detachably mounted to said frame, and
wherein the frame of said headrest portion is detachably mounted to a mounting portion arranged in the frame of said backrest portion, and the frame of said headrest portion is allowed to be mounted to said mounting portion such that an approximately whole of the frame of said headrest portion is positioned within a range surrounded by the frame of said backrest portion.

14. A vehicle seat as claimed in any one of claims 11 to 13, wherein said seating portion is allowed to be flipped up.

15. A vehicle seat as claimed in claim 11 or 12, wherein said plate portion is formed by any one of PP (polypropylene) bead foam, PE (polyethylene) bead foam, PP foam, PE foam, AS resin (acrylonitrile styrene resin), EVA (ethylene polyvinyl acetate copolymer resin) and urethane foam material or a combination thereof.
